Europäisches Patentamt

European Patent Office

Office européen des brevets

(11) Publication number: **0 046 746**
**B1**

## (12) EUROPEAN PATENT SPECIFICATION

(45) Date of publication of patent specification: **14.03.84**

(21) Application number: **80900326.2**

(22) Date of filing: **03.10.79**

(86) International application number:
**PCT/US79/00812**

(87) International publication number:
**WO 81/00972 16.04.81 Gazette 81/9**

(51) Int. Cl.³: **B 05 D 3/02, B 32 B 7/02,
B 32 B 5/16, B 32 B 15/02,
B 32 B 19/02,
B 32 B 27/06,
B 32 B 27/28, C 08 L 27/18**

(54) ARTICLE COATED WITH FLUOROPOLYMER FINISH.

(43) Date of publication of application:
**10.03.82 Bulletin 82/10**

(45) Publication of the grant of the patent:
**14.03.84 Bulletin 84/11**

(84) Designated Contracting States:
**DE FR GB NL SE**

(56) References cited:
FR - A - 2 317 343
GB - A - 1 121 615
US - A - 2 777 783
US - A - 2 961 341
US - A - 2 979 418
US - A - 3 087 827
US - A - 3 293 203
US - A - 3 970 627
US - A - 4 039 713
US - A - 4 049 863
US - A - 4 054 705
US - A - 4 064 303
US - A - 4 123 401
US - A - 4 143 204
US - A - 4 145 325
US - A - 4 180 609

(73) Proprietor: **E.I. DU PONT DE NEMOURS AND
COMPANY
Legal Department 1007 Market Street
Wilmington Delaware 19898 (US)**

(72) Inventor: **VASSILIOU, Eustathios
12 S. Townview Lane
Woodmere, Newark, DE 19711 (US)**

(74) Representative: **De Boisse, Louis et al,
37, Avenue Franklin D. Roosevelt
F-75008 Paris (FR)**

Courier Press, Leamington Spa, England.

# 0 046 746

## Article coated with fluoropolymer finish

Cookware coated with fluoropolymers, especially polytetrafluoroethylene (PTFE), has come into widespread use in recent years. Many cooks prefer to use such cookware because of its nonstick properties and because it is so easy to clean.

While cookware of this type is quite durable, the fluoropolymer coating tends to become scratched after extended use because it is somewhat softer than the utensils used to stir and turn the food in the ware.

Fluoropolymer compositions which contain mica particles, mica particles coated with pigment, or metal flake, give fluoropolymer finishes of this general type having improved scratch resistance. This improved scratch resistance is actual and can be measured physically with instruments. However, the apparent scratch resistance, that which is perceived by the user of the cookware, may not be as high as the actual scratch resistance because food lodges in the slight scratches which may be present and becomes oxidized. These scratches become highlighted because of the high optical contrast between the finish and the oxidized food, and are therefore much more noticeable than they would ordinarily be.

The present invention provides an article bearing a basecoat derived from a composition comprising

(a) a particulate polymer of monoethylenically unsaturated hydrocarbon monomers completely substituted with fluorine atoms or a combination of fluorine atoms and chlorine atoms;

(b) mica particles, mica particles coated with pigment, or metal flake; and

(c) a liquid carrier;

overlaid with a topcoat finish derived from a composition comprising (a), (b) and (c), wherein the concentration of (b) in the topcoat is from 30 to 70% of the concentration of (b) in the basecoat.

Representative base coats of articles coated according to this invention are described in U.S. Patents 3,970,627—Seymus (1976); 4,054,704—Vassiliou (1977); 4,054,705—Vassiliou (1977); 4,064,303—Vassiliou (1977); 4,070,525—Vassiliou et al. (1978); 4,120,608—Vassiliou (1978); 4,123,401—Berghmans et al. (1978). The disclosures of these patents are incorporated into this specification to describe the base coats and how they are obtained.

Coating compositions used in the invention include dispersions of a fluoropolymer in a carrier. The fluoropolymers, carriers and concentrations which can be used are the same as those described in the applications incorporated by reference. The fluoropolymer is preferably the same one used in each coat, and in the most preferred case is PTFE. The fluorocarbon polymers used are those of monomers of hydrocarbons or hydrocarbon ethers completely substituted with fluorine atoms or a combination of fluorine and chlorine atoms. Included in this group are perfluoroolefin polymers such as polytetrafluoroethylene (PTFE) and copolymers of tetrafluoroethylene and hexafluoropropylene in all monomer unit weight ratios, fluorochlorocarbon polymers such as polymonochlorotrifluoroethylene, and copolymers of tetrafluoroethylene and perfluoroalkyl vinyl ethers. Mixtures of these can also be used.

The amount of total solids in the coating compositions will be governed by the method of application, the curing procedures and like factors. Ordinarily, the composition will contain about 10—80% of total solids.

The topcoat composition will show improved coalescence on curing if it also contains a polymer additive, which is a polymer of ethylenically saturated monomers which depolymerizes at the curing temperature of the film, as more particularly described in the aforementioned U.S. Patent 4,123,401.

This polymer additive is ordinarily present in the topcoat composition at a concentration of about 5—75%, by weight of the total of fluoropolymer and polymer additive, preferably about 5—15%, the fluoropolymer being present in a complementary amount to make the total fluoropolymer and polymer additive present equal to 100%.

The preferred polymer additive is an acrylic latex such as of a methyl methacrylate/ethylacrylate/-methacrylic acid 39/57/4 terpolymer. The acrylic particles in the latex preferably have a particle size under 1 micron ($\mu$m), more preferably under 0.5 $\mu$m, most preferably under 0.3 $\mu$m, and they are present in the latex as a stable aqueous dispersion. Alternatively, the acrylic could be provided as a solution in suitable solvents.

If the polymer additive is used, it may also be desirable for the topcoat composition to contain a metal compound which will catalyze the depolymerization of any residue of polymer additive, whose presence might discolor the final finish.

This metal compound can be an oxide or hydroxide of

(1)

| | |
|---|---|
| copper | gallium |
| cobalt | iridium |
| iron | rhodium |
| nickel | platinum |
| chromium | palladium |

2

| | |
|---|---|
| vanadium | tin |
| tantalum | tungsten |
| cerium | lithium |
| thorium | sodium |
| manganese | potassium |
| bismuth | lead |
| cadmium | ytterbium |
| molybdenum | or |
| | silver; |

or

(2)   a compound of any of the metals listed in (1) which decomposes in the temperature range of about 100—500°C to give at least 0.2%, by weight of the metal in the compound, of an oxide or hydroxide.

The metal compound, when it is used, will ordinarily be present in the topcoat composition at a concentration which will provide about 0.005—5 parts of metal per hundred parts of fluoropolymer used.

Preferred metals selected from the list above are:

| | |
|---|---|
| chromium | bismuth |
| cobalt | cadmium |
| iron | lithium |
| nickel | sodium |
| cerium | potassium |
| thorium | lead |
| manganese | or |
| | molybdenum. |

Further preferred, especially for use in food-contact applications, are oxides or hydroxides or lithium, sodium or potassium, and those compounds produced by reaction of a metal from the following list (1) with an acid to form a salt compound of list (2).

(1)   Metals:

| | |
|---|---|
| bismuth | manganese |
| cerium | lithium |
| cobalt | potassium |
| iron | sodium |

(2)   Salts:

| | |
|---|---|
| acetate | octoate |
| caprate | oleate |
| caprylate | palmitate |
| isodeconoate | riconoleate |
| linoleate | soyate |
| naphthenate | stearate |
| nitrate | tallate |

Especially preferred oxidation catalyst compounds are:

| | |
|---|---|
| cobalt octoate | bismuth octoate |
| cerium octoate | iron octoate |
| manganese octoate | |

Most preferred as an oxidation catalyst for general purposes of the invention is a combination of cobalt and cerium octoates.

In some cases, it may also be desirable for the topcoat composition to contain an antioxidant to prevent discoloration of the final finish when cookware bearing the finish is subjected to excessive heat over a prolonged period. These antioxidants are, generally speaking, compounds containing phosphorus, sulfur, boron, or combinations of these. Illustrative of such compounds are the ortho, meta- and pyro acids of these elements; their neutral and basic salts; their esters; and their organic- and organometallic derivatives.

The preferred antioxidants are phosphoric acid, at least completely neutralized with organic base such as triethanolamine or with ammonia, particularly decomposable phosphate salts containing ammonia or amines, 2-ethylhexyldiphenyl phosphate, magnesium glycerophosphate, calcium glycero-

3

phosphate, and iron glycerophosphate. Preferably the acid is sufficiently neutralized so that the coating composition has a pH of at least 8 to prevent coagulation of PTFE suspended in the composition.

The antioxidants are ordinarily present in the compositions at a concentration of about 0.1—10%, by weight of the total solids in the composition.

The topcoat composition can also contain such conventional additives as flow control agents, surfactants, plasticizers, etc., as are necessary or seem desirable. These additives are added for the usual reasons, in the usual ways and in the usual amounts.

Pigments that can be used in coating compositions of the invention include pigments ordinarily used in fluorocarbon coatings to develop the desired colors and pigments having refractive indices substantially the same as that of the fluoropolymer used. Representative of the latter type of pigments are alumina, silica, clays and glass spheres. These pigments are advantageously present in the topcoat composition at a concentration of about 3—30%, by weight of the fluorocopolymer to enhance apparent scratch resistance of the topcoat. Colors and opacity can be obtained with such pigments as $TiO_2$ and iron oxide.

The invention involves the use of flake-type pigments of mica particles, mica particles coated with pigment, and metal flake. Mica particles coated with pigment are preferred, especially those described in U.S. Patents 3,087,828 and 3,087,829 to Linton and 3,087,827 to Klenke and Straton. Such flake type pigments are used at least in the topcoat and the coat directly under the topcoat, with the concentration in the topcoat being less than that in the lower coat. When the coated article has 2 coats on it, the lower coat is the primer. When the coating has 3 or more coats, the lower coat is an intermediate coat adjacent to the topcoat. The terms "lower coat" and "basecoat" are used herein to mean the coat beneath the topcoat, whether it is a primer or an intermediate coat.

The ratio by weight of the flake pigment to the solids content of each coat is such that the topcoat has 30—70% as high a concentration of flake pigment as does the lower coat. The most preferred proportion is 50%.

As a percentage of solids in each of the coats of a 3-layer coating the preferred and most preferred amounts of flake pigment are as follows:

|  | Preferred | Most preferred |
| --- | --- | --- |
| Topcoat | 0.5—2.0% | 1% |
| Intermediate | 1.0—4.0% | 2% |
| Primer | 0—1.0% | 0.2% |

The thickness of the three coating layers expressed in $\mu$m are as follows:

|  | Preferred | Most preferred |
| --- | --- | --- |
| Topcoat and Intermediate | 12.5—125 | 25—50 |
| Primer | 2.4—4.0 | 7.5—12.5 |

The relative thickness of the intermediate and topcoat can vary from 10—90% intermediate and from 90—10% topcoat. More preferably, the intermediate and topcoat will have about the same thickness.

In the development of the present invention it was found that multi-layer coats with as much or more flake pigment in the topcoat as in the lower coat suffer from an increase in apparent scratching in use tests. When a fork was used to scratch the surface during cooking tests over an extended period of time, it was found that the larger amount of flake pigment in the topcoat led to more superficial scratches, perhaps caused by disturbing the orientation of the flake pigment.

The next attempt to obtain improved scratch resistance utilized a 3-layer coating with equal proportions of flake pigment in the primer and intermediate coat but no flake pigment in the topcoat. This combination requires close control of the thickness of the topcoat to avoid discoloration upon curing too thick a topcoat and increased apparent scratching with too thin a topcoat. The solution to these problems was found by using a 2- or 3-layer coat with flake pigment in both the topcoat and the coat beneath it, with less flake pigment in the topcoat than in the lower coat.

The multilayer coatings of the invention are most useful for coating metal cookware, especially frypans, but the compositions can also be used to coat other articles requiring scratch resistant fluoropolymer coatings. These other articles can be made of glass, ceramic, plastic or any other material capable of withstanding the baking temperatures used. For example, the compositions can be used to coat bearings, valves, wire, metal foil, boilers, pipes, ship bottoms, oven liners, iron soleplates, waffle irons, ice cube trays, snow shovels and plows, chutes, conveyors, dies, tools such as saws, files and drills, hoppers and other industrial containers and molds.

The following examples illustrate the invention. In these examples, all parts and percentages are by weight unless indicated otherwise.

Example 1
(A)

A polyamide acid amine salt solution was prepared by first charging a vessel with

| Ingredient | Parts |
|---|---|
| Polyamide acid | 15 |
| (prepared from trimellitic anhydride and bis(4-aminophenyl)-methane, having an inherent viscosity of 0.31, measured as a 0.5% solution in dimethylacetamide, and a free acid content of 7.65%, corresponding to 170 milliequivalents of carboxylic acid per 100 grams) | |
| Water | 50 |
| Diethyl 2-hydroxyethylamine | 4 |
| Triethylamine | 2 |
| Furfuryl alcohol | 18 |
| N-methyl pyrrolidone | 10 |

and then stirring the mixture overnight at room temperature.

The resulting clear solution had a Brookfield viscosity (number 2 spindle, 20 revolutions per minute) of 0.6 Pas (600 centipoises).

(B)

The following were added to a vessel in the order given and mixed:

| Ingredient | Parts |
|---|---|
| Polyamide acid amine salt solution (from Example 1(A)) | 124.57 |
| Furfuryl alcohol | 12.52 |
| Deionized water | 280.28 |
| PTFE dispersion | 354.92 |
| (60% solids, in water, Teflon® TFE-fluorocarbon resin aqueous dispersion, T-30 sold by E.I. du Pont de Nemours and Co.) | |
| Ludox AM® | 143.29 |
| (sodium stabilized colloidal silica having a pH of about 9 at 25°C and a silica content (calculated at $SiO_2$) of 30%, whose particles are surface modified with aluminum and have a particle diameter of 13—14 millimicrons and a specific surface area of 210—230 square meters per gram) | |
| Pigment dispersion | 106.68 |
| Made by ball-milling a mixture of | |
| cobalt oxide 45 parts | |
| water 55 parts | |
| $TiO_2$ coated mica | 0.74 |
| ("Afflair" NF-152-D, sold by E.I. du Pont de Nemours and Co.) | |

The resulting primer composition was sprayed on a degreased aluminum panel to a thickness of about 8 $\mu$m (dry) and air-dried to form a primer-basecoat.

(C)

A topcoat composition was prepared by mixing the following in the order listed:

| Ingredient | | Parts |
|---|---|---|
| Aqueous PTFE dispersion (from Example 1(B)) | | 772.33 |
| Deionized water | | 43.9 |
| $TiO_2$ coated mica (from Example 1(B)) | | 4.72 |
| A mixture of | | 137.62 |
| butyl carbitol | 12.51% | |
| toluene | 30.72% | |
| cerous octoate | 4.94% | |
| triethanolamine | 37.11% | |
| oleic acid | 9.67% | |
| Triton X-100 | 5.05% | |
| (a nonionic surfactant sold by Rohm & Haas Co.) | | |
| Aqueous 40% solids, of a dispersion of methyl methacrylate/ethylacrylate/methacrylic acid 39/57/4 terpolymer | | 143.43 |

# 0 046 746

This topcoat composition was applied to gritblasted aluminum frypan, basecoated as described in Example 1(B). The wet thickness of the film was 15 $\mu$m.

The 2-layer coating was then air-dried and the pan baked at 425°C for 5 minutes.

The resulting finish remained substantially free of apparent scratches after extended use.

## Example 2

A topcoat composition was prepared by mixing the following in the order listed:

| Ingredient | | Parts |
|---|---|---|
| PTFE dispersion (of Example 1(B)) | | 70.95 |
| Deionized water | | 3.87 |
| A mixture of | | 6.19 |
| triethanolamine | 25.86% | |
| butyl carbitol | 15.76% | |
| toluene | 46.26% | |
| oleic acid | 12.12% | |
| Aqueous dispersion of terpolymer (of Example 1(C)) | | 11.90 |
| A mixture of | | 5.66 |
| denionized water | 60.97% | |
| phosphoric acid 85% | 6.47% | |
| triethanolamine | 32.56% | |
| TiO$_2$ coated mica (of Example 1(B)) | | 00.43 |

This topcoat composition was applied, to a thickness of 15 $\mu$m, to a grit-blasted aluminum electric frypan basecoated as described in Example 1(B).

The 2-layer coating was then air-dried and the pan baked at 425°C for 5 minutes.

The resulting finish remained substantially free of apparent scratches and discoloration after extended use.

## Example 3

(A)

To make an article of the invention with a 3-layer coating, a grit-blasted aluminum substrate was first coated with a primer, in accordance with the teachings of U.S. Patent 4,070,525 as follows:

The following were then added to a vessel in the order stated and mixed:

| Ingredient | | Parts |
|---|---|---|
| Polyamide acid amine salt | | 303.6 |
| of Example 1(A) containing 18% of furfuryl alcohol and 10% of N-methylpyrrolidone | | |
| Furfuryl alcohol | | 30.4 |
| Deionized water | | 1040.0 |
| Pigment dispersion | | 105.2 |
| (Made by ball-milling a mixture of | | |
| TiO$_2$ | 44 | |
| Water | 48 | |
| Triethanolamine oleic acid mixture 2/1) | 8 | |
| PTFE dispersion of Example 1(B) | | 445.0 |

To 200 parts of the resulting mixture were then added, with mixing, 8.86 parts of lithium silica solution in water (21% solids, sold by E. I. du Pont de Nemours and Co. as "Lithium Polysilicate 85").

The resulting composition was sprayed as a primer on a grit-blasted aluminum panel to thickness of 5 $\mu$m (dry) and then air-dried.

(B)

An intermediate coat was applied on top of the primer and a topcoat was applied on top of the intermediate coat while the intermediate coat was still wet, using the following compositions:

6

Intermediate coat

| Ingredient | | Parts |
|---|---|---|
| PTFE dispersion of Example 1(B) | | 737.19 |
| Deionized water | | 66.40 |
| Yellow pigment dispersion | | 2.81 |
|     yellow iron oxide | 45% | |
|     deionized water | 54.5% | |
|     sodium polynaphthalene | 0.5% | |
|      sulfonate | | |
| Blue pigment dispersion | | 2.81 |
|     cobaltoxide-aluminum | 45% | |
|     oxide pigment | 54.5% | |
|     deionized water | 54.5% | |
|     sodium polynaphthalene | 0.5% | |
|      sulfonate | | |
| Afflair® $TiO_2$ coated mica of Example 1(B) | | 9.78 |
| Solvent-Catalyst | | 138.79 |
|     butyl carbitol | 12.42%   MIX | |
|     toluene | 30.99%   UNTIL | |
|     cerous octoate (23% metal) | 4.83%   DISSOLVED | |
|     triethanolamine | 36.96% | |
|     oleic acid | 9.84% | |
|     Triton X-100 surfactant | 4.96% | |
| Dispersion of Example 1(B) | | 137.22 |

Topcoat

| Ingredient | | Parts |
|---|---|---|
| PTFE dispersion of Example 1(B) | | 772.33 |
| Deionized water | | 43.90 |
| Afflair® $TiO_2$ coated mica of Example 1(B) | | 4.72 |
| Solvent catalyst | | 137.62 |
|     butyl carbitol | 12.51%   MIX | |
|     toluene | 30.72%   UNTIL | |
|     cerous octoate (23% metal) | 4.94%   DISSOLVED | |
|     triethanolamine | 37.11% | |
|     oleic acid | 9.67% | |
|     Triton X-100 surfactant | 5.05% | |
| Dispersion of Example 1(B) | | 143.43 |

**Claims**

1. An article bearing a multi-layer coating comprising a basecoat derived from a composition comprising:

(a) a particulate polymer of monoethylenically unsaturated hydrocarbon monomers completely substituted with fluorine atoms or a combination of fluorine atoms and chlorine atoms;
(b) mica particles, mica particles coated with pigment, or metal flake; and
(c) a liquid carrier;

overlaid with a topcoat characterized in that the topcoat is derived from a composition comprising (a), (b) and (c), with the concentration of (b) in the topcoat being from 30 to 70% of the concentration of (b) in the basecoat.

2. The article of claim 1 wherein the topcoat us derived from a composition comprising:

(a) a polymer of monoethylenically unsaturated hydrocarbon monomers completely substituted with or a combination of fluorine atoms and chlorine atoms;
(b) mica particles, mica particles coated with pigment, or metal flake;
(c) a liquid carrier; and
(d) a polymer of ethylenically unsaturated monomers which depolymerizes and whose depolymerization products vaporize in the temperature range of about 150°C below the fusion temperature of (a) to about the decomposition tempeature of (a).

3. The article of claim 1 wherein the basecoat is an intermediate coat and there is a primer coat beneath the intermediate coat.

4. The article of claim 1 wherein the polymer in (a) is polytetrafluoroethylene.

5. The article of claim 2 whose topcoat is derived from a composition which additionally contains a catalyst for the depolymerization of the (d) polymer.

6. The article of claim 3 wherein the thickness of the primer coat is 2.5 to 4.0 $\mu$m, and the combined thickness of the intermediate and topcoats is 12.5 to 125 $\mu$m.

7. The article of claim 3 wherein the thickness of the primer coat is 7.5 to 12.5 $\mu$m, and the combined thickness of the intermediate and topcoats is 25 to 50 $\mu$m.

8. A method for improving the apparent scratch resistance of an article bearing a basecoat derived from a composition comprising:

(a) a polymer of monoethylenically unsaturated hydrocarbon monomers completely substituted with fluorine atoms or a combination of fluorine atoms and chlorine atoms;

(b) mica particles, mica particles coated with pigment, or metal flake;

(c) a liquid carrier; and

(d) a polymer of monoethylenically unsaturated monomers which depolymerizes and show depolymerization products vaporize in the temperature range of about 150°C below the fusion temperature of (a) to about the decomposition temperature of (a);

the method comprising topcoating the basecoat with a composition comprising (a), (b), (c) and (d), wherein the concentration of (b) in the topcoat being from 30 to 70% of the concentration of (b) in the basecoat, and the fusing the coatings.

**Revendications**

1. Un article portant un revêtement multi-couches comprenant une couche de base dérivée d'une composition comprenant:

(a) un polymère en particules de monomères hydrocarbonés monoéthyléniquement insaturés complètement substitués par des atomes de fluor ou par une combinaison d'atomes de fluor et d'atomes de chlore;

(b) des particules de mica, des particules de mica revêtues d'un pigment, ou des paillettes métalliques; et

(c) un véhicule liquide;

recouverte par: une couche supérieure, caractérisé en ce que la couche supérieure dérive d'une composition comprenant (a), (b), et (c), la concentration de (b) dans la couche supérieure étant égale à 30 à 70% de la concentration de (b) dans la couche de base.

2. L'article de la revendication 1 dans lequel la couche supérieure dérive d'une composition comprenant:

(a) un polymère de monomères monoéthyléniquement insaturés complètement substitués par des atomes de fluor ou par une combinaison d'atomes de fluor et d'atomes de chlore;

(b) des particules de mica, des particules de mica revêtues d'un pigment, ou des paillettes métalliques;

(c) un véhicule liquide; et

(d) un polymère de monomères éthyléniquement insaturés qui se dépolèmérise et dont les produits de dépolymérisation se vaporisent dans l'intervalle de température allant d'environ 150°C au-dessous de la température de fusion de (a) à environ la température de décomposition de (a).

3. L'article de la revendication 1 dans lequel la couche de base et une couche intermédiaire et il existe une couche primaire en-dessous de la couche intermédiaire.

4. L'article de la revendication 1 dans lequel le polymère dans (a) est du polytétrafluoroéthylène.

5. L'article de la revendication 2 dont la couche supérieure dérive d'une composition qui contient additionnellement un catalyseur pour la dépolymérisation du polymère (d).

6. L'article de la revendication 3 dans lequel l'épaisseur de la couche primaire va de 2,5 à 4,0 micromètres, et les épaisseurs combinées des couches intermédiaire et supérieure vont de 12,5 à 125 micromètres.

7. L'article de la revendication 3 dans lequel l'épaisseur de la couche primaire va de 7.5 à 12.5 micromètres, et les épaisseurs combinées des couches intermédiaires et supérieures vont de 25 à 50 micromètres.

8. Un procédé pour améliorer la résistance aux rayures apparentes d'un article portant une couche de base dérivée d'une composition comprenant:

(a) un polymère de monomères hydrocarbonés monoéthyléniquement insaturés complètement substitués par des atomes de fluor ou par une combinaison d'atomes de fluor et d'atomes de chlore;

(b) des particules de mica, des particules de mica revêtues d'un pigment, ou des paillettes métalliques;

(c) un véhicule liquide; et

(d) un polymère de monomères monoéthyléniquement insaturés qui se dépolymérise et dont les produits de dépolymérisation se vaporisent dans l'intervalle de température allant d'environ 150°C au-dessous de la température de fusion de (a) à environ la température de décomposition de (a);

le procédé consistant à appliquer sur la couche de base une couche supérieure d'une composition comprenant (a), (b), (c) et (d), la concentration de (b) dans la couche supérieure étant égale à 30 à 70% de la concentration de (b) dans la couche de base, puis à fusionner les couches.

## Patentansprüche

1. Artikel, der einen mehrschichtigen Überzug aufweist mit einer Grundschicht, die aus einer Zusammensetzung abgeleitet ist, mit

(a) einem feinteiligen Polymeren monoethylenisch ungesättigter Kohlenwasserstoffmonomerer, die vollständig mit Fluoratomen oder mit einer Kombination von Fluoratomen und Chloratomen substituiert sind;

(b) Glimmerteilchen, pigmentüberzogenen Glimmerteilchen oder Metallflocke; und

(c) einem flüssigen Träger;

die überlagert ist mit einer Deckschicht, die abgeleitet ist von einer Zusammensetzung, die (a), (b) and (c) aufweist, wobei die Konzentration an (b) in der Deckschicht 30 bis 70% der Konzentration von (b) in der Grundschicht beträgt.

2. Artikel nach Anspruch 1, worin die Deckschicht von einer Zusammensetzung abgeleitet ist mit:

(a) einem Polymeren monoethylenisch ungesättigter Monomerer, die mit Fluoratomen oder einer Kombination von Fluoratomen und Chloratomen vollständig substituiert sind;

(b) Glimmerteilchen, pigmentüberzogenen Glimmerteilchen oder Metallflocke;

(c) einem flüssigen Träger; und

(d) einem depolymerisablen Polymeren ethylenisch ungesättigter Monomerer, dessen Depolymerisationsprodukte in einem Temperaturbereich von etwa 150°C unterhalb der Schmelztemperatur von (a) bis etwa der Zersetzungstemperatur von (a) verdampfen.

3. Artikel nach Anspruch 1, worin die Grundschicht eine Zwischenschicht ist, unter der sich eine Grundierungsschicht befindet.

4. Artikel nach Anspruch 1, worin das Polymere (a) Polytetrafluorethylen ist.

5. Artikel nach Anspruch 2, dessen Deckschicht von einer Zusammensetzung abgeleitet ist, die zusätzlich einen Katalysator für die Depolymerisation des Polymeren (d) enthält.

6. Artikel nach Anspruch 3, wobei die Dicke der Grundschicht 2,5 bis 4,0 $\mu$m und die kombinierte Dicke von Zwischenschicht und Deckschicht 12,5 bis 125 $\mu$m beträgt.

7. Artikel nach Anspruch 3, wobei die Dicke der Grundschicht 7,5 bis 12,5 $\mu$m und die kombinierte Dicke von Zwischenschicht und Deckschicht 25 bis 50 $\mu$m beträgt.

8. Verfahren zur Verbesserung der scheinbaren Kratzfestigkeit eines Artikels, der eine Grundschicht aufweist, die sich von folgender Zusammensetzung ableitet:

(a) einem Polymeren monoethylenisch ungesättigter Kohlenwasserstoffmonomerer, die vollständig mit Fluoratomen oder einer Kombination von Fluoratomen und Chloratomen substituiert sind;

(b) Glimmerteilchen, pigmentüberzogenen Glimmerteilchen oder Metallflocke;

(c) einem flüssigen Träger; und

(d) einem depolymerisablen Polymeren monoethylenisch ungesättigter Monomerer, dessen Depolymerisationsprodukte in Temperaturbereich von etwa 150°C unterhalb der Schmelztemperatur von (a) bis etwa der Zersetzungstemperatur von (a) verdampfen;

bei dem man die Grundschicht mit einer Deckschicht überzieht, die sich von (a), (b), (c) und (d) ableitet, worin die Konzentration an (b) in der Deckschicht 30 bis 70% der Konzentration an (b) in der Grundschicht beträgt, und dann die Überzüge aufschmilzt.